(19) Europäisches Patentamt
European Patent Office
Office européen des brevets

(11) EP 2 767 929 A2

(12) **DEMANDE DE BREVET EUROPEEN**

(43) Date de publication:
**20.08.2014 Bulletin 2014/34**

(21) Numéro de dépôt: **14155414.7**

(22) Date de dépôt: **17.02.2014**

(51) Int Cl.:
***G06K 9/38*** *(2006.01)* *G06T 7/00* *(2006.01)*
*G06K 9/32* *(2006.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.02.2013 FR 1351351**
**27.09.2013 FR 1359340**

(71) Demandeur: **SAGEMCOM DOCUMENTS SAS**
**92500 Rueil Malmaison (FR)**

(72) Inventeurs:
- **Carrie, Aurore**
**92500 RUEIL MALMAISON (FR)**
- **Berger, Jérôme**
**92500 RUEIL MALMAISON (FR)**

(74) Mandataire: **Maillet, Alain**
**Cabinet Le Guen Maillet**
**5, place Newquay**
**B.P. 70250**
**35802 Dinard Cedex (FR)**

(54) **Procédé d'affectation aux pixels d'une image d'une première valeur ou d'une seconde valeur**

(57) L'invention concerne un procédé d'affectation aux pixels d'une image d'une première valeur ou d'une seconde valeur. Le procédé comporte les étapes, exécutées pour chaque pixel de l'image, de :
- détermination (E203), à partir des valeurs des pixels voisins et de la valeur du pixel, si les pixels au voisinage du pixel sont représentatifs d'une zone où le texte est plus clair que le fond ou d'une zone où le texte est plus sombre que le fond,
- détermination (E204) d'un seuil à partir du résultat de la détermination si les pixels au voisinage du pixel sont représentatifs d'une zone où le texte est plus clair que le fond ou d'une zone où le texte est plus sombre que le fond,
- affectation (E205) au pixel de la première valeur ou de la seconde valeur en fonction de la comparaison de la valeur du pixel au seuil déterminé.

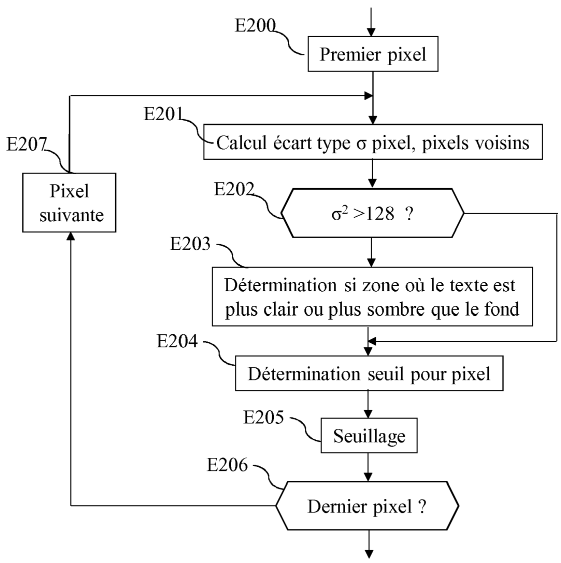


Fig. 2

EP 2 767 929 A2

## Description

La présente invention concerne un procédé et un dispositif d'affectation aux pixels d'une image d'une première valeur ou d'une seconde valeur.

L'affectation aux pixels d'une image d'une première valeur ou d'une seconde valeur respectivement représentatives du noir et du blanc est classiquement appelée la binarisation d'une image.

Lorsqu'on numérise un document papier, on obtient généralement une image en couleur ou en niveaux de gris. Cependant, certaines utilisations préfèrent fonctionner avec une image binaire, c'est-à-dire une image qui ne contienne que deux couleurs : le noir pur et le blanc pur. C'est le cas par exemple de la reconnaissance de caractères (OCR).

De plus, les images binaires peuvent se compresser très facilement afin d'occuper moins d'espace de stockage et peuvent ainsi être transmises avec une bande passante réseau plus faible.

Il existe des méthodes de seuillage pour binariser une image. Ces méthodes consistent à comparer la valeur de chaque pixel à un seuil, puis à mettre la valeur du pixel à « blanc » si le pixel est plus clair que le seuil ou bien à mettre la valeur du pixel à « noir » si le pixel est plus foncé que le seuil.

Le seuil peut être fixé arbitrairement pour toutes les images. Par exemple, pour des images usuelles dont les valeurs de pixels sont comprises entre 0 et 255, le seuil est fixé à 128.

Le seuil peut être fixé globalement pour chaque image. Par exemple, le seuil peut être fixé à la moyenne des valeurs des pixels de l'image.

Le seuil peut être fixé localement pour chaque pixel en fonction d'une analyse du voisinage du pixel.

Bien souvent, ces différentes techniques ne sont pas adaptées lorsqu'un document contient du texte sur un fond coloré ou sombre.

La présente invention a pour but de résoudre les inconvénients de l'art antérieur en proposant un procédé et un dispositif d'affectation aux pixels d'une image d'une première valeur ou d'une seconde valeur qui soient aptes à binariser des images contenant du texte clair sur un fond coloré ou sombre ou du texte sombre sur un fond clair.

A cette fin, selon un premier aspect, l'invention propose un procédé d'affectation aux pixels d'une image d'une première valeur ou d'une seconde valeur, caractérisé en ce que le procédé comporte les étapes, exécutées pour chaque pixel de l'image de :

- détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond,
- détermination d'un seuil à partir du résultat de la détermination si les pixels au voisinage du pixel sont représentatifs d'une zone où le texte est plus clair que le fond ou d'une zone où le texte est plus sombre que le fond,
- affectation au pixel de la première valeur ou de la seconde valeur en fonction de la comparaison de la valeur du pixel au seuil déterminé.

La présente invention concerne aussi un dispositif d'affectation aux pixels d'une image d'une première valeur ou d'une seconde valeur, caractérisé en ce que le dispositif comporte:

- des moyens de détermination, pour chaque pixel de l'image, à partir des valeurs des pixels voisins et de la valeur du pixel, si les pixels au voisinage du pixel sont représentatifs d'une zone où le texte est plus clair que le fond ou d'une zone où le texte est plus sombre que le fond,
- des moyens de détermination, pour chaque pixel de l'image, d'un seuil à partir du résultat de la détermination si les pixels au voisinage du pixel sont représentatifs d'une zone où le texte est plus clair que le fond ou d'une zone où le texte est plus sombre que le fond,
- des moyens d'affectation, pour chaque pixel de l'image, au pixel de la première valeur ou de la seconde valeur en fonction de la comparaison de la valeur du pixel au seuil déterminé.

Ainsi, en rendant la détermination du seuil dépendante de la détermination, pixel par pixel, si les pixels au voisinage du pixel sont représentatifs d'une zone où le texte est plus clair que le fond ou d'une zone où le texte est plus sombre que le fond, la présente invention améliore la binarisation d'une image comportant du texte clair sur un fond coloré ou sombre ou du texte sombre sur un fond clair.

Lorsqu'une reconnaissance de caractères est effectuée sur l'image binarisée grâce à la présente invention, les résultats fournis par la reconnaissance de caractères sont grandement améliorés.

Selon un mode particulier de l'invention, la détermination, si les pixels au voisinage du pixel sont représentatifs d'une zone où le texte est plus clair que le fond ou d'une zone où le texte est plus sombre que le fond, est effectuée en calculant une asymétrie statistique sur les valeurs des pixels voisins et la valeur du pixel.

Ainsi, la binarisation d'une image comportant du texte sur un fond coloré ou sombre ou clair est améliorée.

Selon un mode particulier de l'invention, l'asymétrie statistique est calculée selon la formule suivante : $\gamma^3 = \frac{1}{N}\sum_i \left(\frac{x_i - \mu}{\sigma}\right)^3$ où $N$ est le nombre de pixels voisins plus un, σ un écart type déterminé sur les valeurs du pixel et des pixels voisins, et μ est la moyenne des valeurs du pixel et des pixels voisins et $x_i$ prenant la valeur du pixel et des pixels voisins.

Ainsi, la binarisation d'une image comportant du texte clair sur un fond coloré ou sombre ou du texte sombre sur un fond clair est améliorée.

Selon un mode particulier de l'invention, le seuil est déterminé en outre en fonction de l'asymétrie statistique.

Ainsi, la binarisation d'une image comportant du texte clair sur un fond coloré ou sombre ou du texte sombre sur un fond clair est améliorée.

Selon un mode particulier de l'invention, la détermination, si les pixels au voisinage du pixel sont représentatifs d'une zone où le texte est plus clair que le fond ou d'une zone où le texte est plus sombre que le fond, est effectuée comparant la valeur médiane *m* des valeurs des pixels voisins et du pixel avec la moyenne des valeurs des pixels voisins et du pixel.

Ainsi, la binarisation d'une image comportant du texte clair sur un fond coloré ou sombre ou du texte sombre sur un fond clair est améliorée.

Selon un mode particulier de l'invention, le seuil est déterminé en outre en fonction de l'écart type déterminé sur les valeurs du pixel et des pixels voisins.

Ainsi, la binarisation d'une image comportant du texte clair sur un fond coloré ou sombre ou du texte sombre sur un fond clair est améliorée.

Selon un mode particulier de l'invention, le seuil est déterminé en outre en fonction de la moyenne des valeurs des pixels voisins et du pixel.

Ainsi, la binarisation d'une image comportant du texte clair sur un fond coloré ou sombre ou du texte sombre sur un fond clair est améliorée.

Selon un mode particulier de l'invention, le seuil est déterminé selon la formule suivante :

$$\boldsymbol{\tau} = \begin{cases} \boldsymbol{\tau_0} & \text{si } \boldsymbol{\sigma} \leq \boldsymbol{\sigma_0} \\ \boldsymbol{\tau_0} \times \dfrac{\boldsymbol{\sigma_1^2} - \boldsymbol{\sigma^2}}{\boldsymbol{\sigma_1^2} - \boldsymbol{\sigma_0^2}} + (\boldsymbol{\mu} + \boldsymbol{k} \times \boldsymbol{\sigma} \times \boldsymbol{\gamma^3}) \times \dfrac{\boldsymbol{\sigma^2} - \boldsymbol{\sigma_0^2}}{\boldsymbol{\sigma_1^2} - \boldsymbol{\sigma_0^2}} & \text{si } \boldsymbol{\sigma_0} \leq \boldsymbol{\sigma} \leq \boldsymbol{\sigma_1} \\ \boldsymbol{\mu} + \boldsymbol{k} \times \boldsymbol{\sigma} \times \boldsymbol{\gamma^3} & \text{si } \boldsymbol{\sigma} \geq \boldsymbol{\sigma_1} \end{cases}$$

où $\boldsymbol{\sigma_1^2}$ et $\boldsymbol{\sigma_0^2}$ sont des valeurs prédéterminées telles que $\boldsymbol{\sigma_1^2}$ est supérieur à a $\boldsymbol{\sigma_0^2}$, $\tau_0$ est un seuil global calculé sur l'ensemble de l'image, *k* est une constante, μ est la moyenne des valeurs du pixel et des pixels voisins, σ est l'écart type déterminé sur les valeurs du pixel et des pixels voisins et $\gamma^3$ est l'asymétrie statistique.

Ainsi, la binarisation d'une image comportant du texte clair sur un fond coloré ou sombre ou du texte sombre sur un fond clair est améliorée.

Selon un mode particulier de l'invention, le seuil est déterminé selon la formule suivante :

$\tau = \mu \times (1 + k \times (\sigma/R - 1))$ si les pixels au voisinage du pixel sont représentatifs d'une zone où le texte est plus sombre que le fond,

$\tau = M - (M - \mu) \times (1 - k \times (\sigma/R - 1))$ si les pixels au voisinage du pixel sont représentatifs d'une zone où le texte est plus clair que le fond,

où *M* est la valeur maximale que peut prendre un pixel, *k* et *R* sont des valeurs prédéterminées, μ est la moyenne des valeurs du pixel et des pixels voisins, σ est l'écart type déterminé sur les valeurs du pixel et des pixels voisins.

Ainsi, la binarisation d'une image comportant du texte clair sur un fond coloré ou sombre ou du texte sombre sur un fond clair est améliorée.

Selon un mode particulier de l'invention, l'affectation au pixel de la première valeur ou de la seconde valeur en fonction de la comparaison de la valeur du pixel au seuil déterminé est en outre dépendante de la détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond.

Ainsi, le texte apparaîtra toujours en noir sur un fond blanc.

Selon un mode particulier de l'invention, la détermination, à partir des valeurs des pixels voisins et de la valeur

du pixel, si les pixels au voisinage du pixel sont représentatifs d'une zone où le texte est plus clair que le fond ou d'une zone où le texte est plus sombre que le fond est effectuée à partir de paires de nombres réels compris entre 0 et 1.

Ainsi, il est possible de tenir compte de l'incertitude lors de la détermination.

Selon un mode particulier de l'invention, la détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond est effectuée en utilisant un algorithme de propagation.

Ainsi, il est possible de résoudre l'incertitude sur un pixel grâce aux résultats des pixels voisins.

Selon un mode particulier de l'invention, l'algorithme de propagation est effectué dans deux sens différents de parcours des pixels.

Ainsi, il est possible de résoudre l'incertitude en fonction des pixels situés d'un côté ou de l'autre de chaque pixel.

Selon un mode particulier de l'invention, la détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond est effectuée à partir de différents nombres de pixels voisins.

Ainsi, il est possible de s'adapter à différentes tailles de texte sur le document.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un exemple de réalisation d'un dispositif de binarisation d'une image composée de pixels ;
la Fig. 2 représente un algorithme de binarisation d'une image composée de pixels ;
la Fig. 3 représente un premier mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond ;
la Fig. 4 représente un second mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond ;
la Fig. 5 représente un troisième mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond ;
la Fig. 6 représente un quatrième mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond.

La **Fig. 1** représente un exemple de réalisation d'un dispositif de binarisation d'une image composée de pixels.

Le dispositif de binarisation 10 comprend :

- un processeur, micro-processeur, microcontrôleur 100 ;
- une mémoire volatile 103 ;
- une mémoire non volatile 102;
- éventuellement, un lecteur 104 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 105 avec un réseau de communication, comme par exemple un réseau de radiotéléphonie cellulaire ou Internet par laquelle des documents à traiter selon la présente invention sont reçus.
- un bus de communication reliant le processeur 100 à la mémoire ROM 103, à la mémoire RAM 103, au lecteur de médium de stockage 104 et à l'interface 105.

Le processeur 100 est capable d'exécuter des instructions chargées dans la mémoire volatile 103 à partir de la mémoire non volatile 102, d'une mémoire externe (non représentée), d'un support de stockage, tel qu'une carte SD ou autre, ou d'un réseau de communication. Lorsque le dispositif 10 est mis sous tension, le processeur 100 est capable de lire de la mémoire volatile 103 des instructions et de les exécuter. Ces instructions forment un programme d'ordinateur qui cause la mise en oeuvre, par le processeur 100, de tout ou partie des procédés décrits en relation avec les Figs. 2 à 6.

Tout ou partie des procédés décrits en relation avec les Figs. 2 à 6 peuvent être implémentés sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté

sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 2** représente un algorithme de binarisation d'une image composée de pixels.

Plus précisément, le présent algorithme est exécuté par le processeur 100 du dispositif 10.

L'image est par exemple une image en niveau de gris dont les pixels varient entre la valeur nulle et 256.

A l'étape E200, le processeur 100 sélectionne un premier pixel de l'image à binariser.

A l'étape suivante E201, le processeur 100 calcule l'écart type $\sigma$ des valeurs du pixel sélectionné et de ses pixels voisins.

Par exemple, le nombre N de pixels voisins plus un de la zone où il est déterminé si le texte est plus clair que le fond ou si le texte est plus sombre que le fond. N est égal à 15*15 ou 31*31 ou 63*63 selon la résolution de l'image.

A l'étape suivante E202, le processeur 100 vérifie si le carré de l'écart type est supérieur ou égal à une valeur prédéterminée égale à 128 ou à une valeur prédéterminée comprise entre 100 et 175.

Si le carré $\sigma^2$ de l'écart type est supérieur ou égal à 128, le processeur 100 passe à l'étape E203. Si le carré $\sigma^2$ de l'écart type est inférieur à 128, le processeur 100 passe à l'étape E204.

Il est à remarquer ici que l'étape E202, dans une variante de réalisation, n'est pas exécutée. Selon cette variante, le processeur 100 passe de l'étape E200 à E203.

A l'étape E203, le processeur 100 détermine si les pixels voisins du pixel sélectionné sont représentatifs d'une zone où le texte est plus clair que le fond ou d'une zone où le texte est plus sombre que le fond.

Il est à remarquer ici que le fond du texte représente la valeur des pixels au voisinage du texte.

Par exemple, et selon le mode de réalisation préféré de l'invention, le processeur 100 calcule une asymétrie statistique des valeurs des pixels du voisinage. L'asymétrie statistique d'un ensemble de valeurs $x_i$ est définie par :

$\gamma^3 = \frac{1}{N}\sum_i \left(\frac{x_i-\mu}{\sigma}\right)^3$ où $N$ est le nombre de pixels voisins et du pixel sélectionné, et $\mu$ est la moyenne des valeurs des pixels voisins et du pixel sélectionné. L'asymétrie statistique est négative si le pixel est représentatif d'une zone où le texte est plus clair que le fond et positive si le pixel est représentatif d'une zone où le texte est plus sombre que le fond.

Selon un autre mode de réalisation de l'invention, le processeur 100 calcule la différence $m - \mu$ entre la médiane $m$ des valeurs des pixels voisins et du pixel sélectionné et leur moyenne $\mu$. Cette différence est négative si le pixel est représentatif d'une zone où le texte est plus clair que le fond et positive si le pixel est représentatif d'une zone où le texte est plus sombre que le fond.

En d'autres termes, ceci est équivalent à comparer la moyenne et la médiane. Le texte est plus sombre que le fond si la médiane est plus grande que la moyenne et inversement.

A l'étape suivante E204, le processeur 100 calcule pour le pixel sélectionné une valeur de seuil.

Par exemple, le seuil $\tau$ est calculé selon la formule : $\tau = \mu + k \times \sigma \times \gamma^3$ où $k$ est une constante arbitraire comprise entre 0,25 et 0,75. La constante k est par exemple égale à 0,5.

Par exemple, le seuil $\tau$ est calculé selon la formule :

$$\tau = \begin{cases} \tau_0 & \text{si } \sigma \leq \sigma_0 \\ \tau_0 \times \frac{\sigma_1^2 - \sigma^2}{\sigma_1^2 - \sigma_0^2} + (\mu + k \times \sigma \times \gamma^3) \times \frac{\sigma^2 - \sigma_0^2}{\sigma_1^2 - \sigma_0^2} & \text{si } \sigma_0 \leq \sigma \leq \sigma_1 \\ \mu + k \times \sigma \times \gamma^3 & \text{si } \sigma \geq \sigma_1 \end{cases}$$

Dans lequel $\tau_0$ est une valeur prédéterminée, par exemple comprise entre 50 et 150 ou est égale à la valeur moyenne des pixels de l'image. $\boldsymbol{\sigma_1^2}$ est par exemple égal à 128 et $\boldsymbol{\sigma_0^2}$ est compris entre 0 et $\boldsymbol{\sigma_1^2}$. Par exemple $\boldsymbol{\sigma_0^2}$ est égal à 0 ou 64.

Par exemple, le seuil est calculé avec une formule différente selon que l'analyse a déterminé que le voisinage est représentatif d'une zone où le texte est plus clair que le fond ou d'une zone où le texte est plus sombre que le fond.

Selon cet exemple, le seuil $\tau$ est calculé selon la formule :

$\tau = \mu \times (1 + k \times (\sigma/_R - 1))$ où $k$ et $R$ sont des constantes arbitraires, par exemple, $k$=0,5 et $R$=128 si le voisinage est représentatif d'une zone où le texte est plus sombre que le fond.

Selon cet exemple, le seuil $\tau$ est calculé selon la formule :

$\tau = M - (M - \mu) \times (1 - k \times (\sigma/_R - 1))$ où $M$ est la valeur maximale que peut prendre un pixel, par exemple 255, si le voisinage est représentatif d'une zone où le texte est plus clair que le fond.

A l'étape E205, le seuillage du pixel sélectionné est déterminé en affectant la valeur binaire 1 ou 0 au pixel sélectionné.

Si la valeur du pixel est inférieure au seuil déterminé, le pixel est mis à la valeur 1 correspondant au blanc.

Si la valeur du pixel est supérieure au seuil déterminé, le pixel est mis à la valeur nulle correspondant au noir.

En variante, la valeur du pixel est dépendante de l'étape de détermination E203 et dépend du fait que les pixels voisins du pixel sélectionné sont représentatifs d'une zone où le texte est plus clair que le fond ou d'une zone où le texte est plus sombre que le fond.

Si les pixels voisins du pixel sélectionné sont représentatifs d'une zone où le texte est plus clair que le fond, le pixel est mis à la valeur 1 correspondant au blanc si la valeur du pixel est inférieure au seuil déterminé.

Si les pixels voisins du pixel sélectionné sont représentatifs d'une zone où le texte est plus sombre que le fond, le pixel est mis à la valeur nulle correspondant au noir si la valeur du pixel est inférieure au seuil déterminé.

A l'étape suivante E206, le processeur 100 vérifie si tous les pixels ont été binarisés. Si tous les pixels de l'image ont été binarisés, le processeur 100 interrompt le présent algorithme.

Si au moins un pixel de l'image n'a pas été binarisé, le processeur 100 passe à l'étape E207.

A l'étape E207, le processeur 100 sélectionne un autre pixel de l'image et retourne à l'étape E201.

La **Fig. 3** représente un premier mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond.

A l'étape E300, le processeur 100 effectue pour chaque pixel de l'image une analyse locale du voisinage du pixel.

Pour cela, le processeur 100 calcule, pour le voisinage de chaque pixel au moins une valeur $\varphi$ comprise entre 0 et 1 telle que la valeur nulle représente une zone où le texte est plus clair que le fond, la valeur binaire un représente une zone où le texte est plus sombre que le fond et les valeurs intermédiaires représentent une incertitude plus ou moins forte. En particulier, la valeur un demi signifie qu'il n'est pas possible d'identifier si les pixels au voisinage du pixel sont représentatifs d'une zone où le texte est plus clair que le fond ou d'une zone où le texte est plus sombre que le fond.

Plus précisément, le processeur 100 calcule, pour chaque pixel, plusieurs valeurs $\varphi_s$, $\varphi_m$ *et* $\varphi_1$. $\varphi_s$ est calculée pour un voisinage de 15*15 pixels, $\varphi_m$ est calculée pour un voisinage de 31*31 pixels et $\varphi_1$ est calculée pour un voisinage de 63*63 pixels selon les formules suivantes :

$$\varphi_s = \begin{cases} 0 \text{ si } \gamma_s \geq \gamma_0 \\ \dfrac{\gamma_0 - \gamma_s}{\gamma_0} * \varphi_0 \text{ si } \gamma_0 \geq \gamma_s \geq 0 \\ \dfrac{\gamma_0 - \gamma_s}{\gamma_0} * \varphi_0 - \dfrac{\gamma_s}{\gamma_0} \text{ si } 0 \geq \gamma_s \geq -\gamma_0 \\ 1 \text{ si } -\gamma_0 \geq \gamma_s \end{cases}$$

$$\varphi_m = \begin{cases} 0 \text{ si } \gamma_m \geq \gamma_0 \\ \dfrac{\gamma_0 - \gamma_m}{\gamma_0} * \varphi_0 \text{ si } \gamma_0 \geq \gamma_m \geq 0 \\ \dfrac{\gamma_0 - \gamma_m}{\gamma_0} * \varphi_0 - \dfrac{\gamma_m}{\gamma_0} \text{ si } 0 \geq \gamma_m \geq -\gamma_0 \\ 1 \text{ si } -\gamma_0 \geq \gamma_m \end{cases}$$

$$\varphi_l = \begin{cases} 0 \text{ si } \gamma_l \geq \gamma_0 \\ \dfrac{\gamma_0 - \gamma_l}{\gamma_0} * \varphi_0 \text{ si } \gamma_0 \geq \gamma_l \geq 0 \\ \dfrac{\gamma_0 - \gamma_l}{\gamma_0} * \varphi_0 \text{ - } \dfrac{\gamma_l}{\gamma_0} \text{ si } 0 \geq \gamma_l \geq -\gamma_0 \\ 1 \text{ si -}\gamma_0 \geq \gamma_l \end{cases}$$

Dans ces équations, $\gamma_s$ ou $\gamma_m$ ou $\gamma_l$ représente une asymétrie statistique des valeurs des pixels du voisinage. L'asymétrie statistique d'un ensemble de valeurs $x_i$ est définie par : $\gamma_s{}^3 = \frac{1}{N}\sum_i \left(\frac{x_i - \mu}{\sigma}\right)^3$ ou $\gamma_m{}^3 = \frac{1}{N}\sum_i \left(\frac{x_i - \mu}{\sigma}\right)^3$ ou $\gamma_l{}^3 = \frac{1}{N}\sum_i \left(\frac{x_i - \mu}{\sigma}\right)^3$ où $N$ est le nombre de pixels voisins et du pixel sélectionné, et $\mu$ est la moyenne des valeurs des pixels voisins et du pixel sélectionné. L'asymétrie statistique est négative si le pixel est représentatif d'une zone où le texte est plus clair que le fond ou d'une zone où le texte est plus sombre que le fond. $\gamma_0$ représente un seuil constant tel qu'on considère que la mesure est considérée comme fiable si l'asymétrie statistique est plus grande que ce seuil en valeur absolue. $\varphi_0$ est une constante qui représente la valeur de $\varphi$ lorsque l'asymétrie statistique est nulle. $\varphi_0$ est par exemple égale à 0,5 voire comprise entre 0,5 et 0,6 si l'on considère qu'en majorité les pixels au voisinage du pixel sont représentatifs d'une zone où le texte est plus sombre que le fond.

Il est à remarquer ici que le calcul de $\gamma_s$ ou $\gamma_m$ ou $\gamma_l$ est coûteux par la présence d'une racine cubique et d'une racine carrée. Pour simplifier les calculs, on peut remplacer $\gamma_s$ ou $\gamma_m$ ou $\gamma_l$ et $\gamma_0$ par $\gamma_s{}^6$ ou $\gamma_m{}^6$ ou $\gamma_l{}^6$ et $\gamma_0{}^6$ respectivement. Ce changement change légèrement la répartition des valeurs intermédiaires mais fournit un résultat final qualitativement similaire.

Dans ce cas :

$$\varphi_s = \begin{cases} 0 & \text{si } \gamma_s \geq \gamma_0 \\ \frac{\gamma_0^6 - \gamma_s^6}{\gamma_0^6} \times \varphi_0 & \text{si } \gamma_0 \geq \gamma_s \geq \\ \frac{\gamma_0^6 - \gamma_s^6}{\gamma_0^6} \times \varphi_0 + \frac{\gamma_s^6}{\gamma_0^6} & \text{si } 0 \geq \gamma_s \geq -\gamma_0 \\ 1 & \text{si } -\gamma_0 \geq \gamma_s \end{cases}$$

$$\varphi_m = \begin{cases} 0 & \text{si } \gamma_m \geq \gamma_0 \\ \frac{\gamma_0^6 - \gamma_m^6}{\gamma_0^6} \times \varphi_0 & \text{si } \gamma_0 \geq \gamma_m \geq 0 \\ \frac{\gamma_0^6 - \gamma_m^6}{\gamma_0^6} \times \varphi_0 + \frac{\gamma_m^6}{\gamma_0^6} & \text{si } 0 \geq \gamma_m \geq -\gamma_0 \\ 1 & \text{si } -\gamma_0 \geq \gamma_m \end{cases}$$

$$\varphi_l = \begin{cases} 0 & \text{si } \gamma_l \geq \gamma_0 \\ \frac{\gamma_0^6 - \gamma_l^6}{\gamma_0^6} \times \varphi_0 & \text{si } \gamma_0 \geq \gamma_l \geq 0 \\ \frac{\gamma_0^6 - \gamma_l^6}{\gamma_0^6} \times \varphi_0 + \frac{\gamma_l^6}{\gamma_0^6} & \text{si } 0 \geq \gamma_l \geq -\gamma_0 \\ 1 & \text{si } -\gamma_0 \geq \gamma_l \end{cases}$$

Il est à remarquer ici que dans un mode particulier de réalisation, si $\sigma^2 \leq \sigma_0^2$, on fixe $\varphi = \varphi_0$ quelle que soit la valeur de $\gamma_s$ ou $\gamma_m$ ou $\gamma_l$.

Dans un mode préféré de la présente invention, $\sigma_0^2 = 48$, $\gamma_0^6 = 3,614$ et $\varphi_0 = 0,525$.

A l'étape suivante E301, le processeur 100 combine les valeurs $\varphi_s$, $\varphi_m$ *et* $\varphi_1$ avec la formule suivante :

$$\varphi = w_s\varphi_s + w_m\varphi_m + w_l\varphi_l$$

Où $w_s$, $w_m$ et $w_l$ sont des constantes comprises entre 0 et 1 et dont la somme vaut 1. Par exemple $w_s = 0,33$, $w_m = 0,58$ et $w_l = 0,09$.

Bien entendu, d'autres combinaisons de voisinages plus ou moins nombreux et de tailles plus ou moins grandes peuvent être utilisées selon la présente invention.

A l'étape suivante E302, le processeur 100 initialise une table $\Phi_0$ qui comprend la valeur $\varphi$ calculée pour chaque pixel.

A l'étape suivante E304, le processeur 100 sélectionne un premier pixel.

A l'étape suivante E304, le processeur 100 vérifie si $\varphi_{min} \leq \varphi_i(1,c) \leq \varphi_{max}$ où $\varphi_i(l, c)$ est la valeur correspondant au pixel situé ligne *l*, colonne c pour l'itération *i* des étapes E303 à E308, $\varphi_{min}$ est par exemple égale à 0,1 et $\varphi_{max}$ est par exemple égale à 0,9.

Si $\varphi_{min} \leq \varphi_i(1,c) \leq \varphi_{max}$, le processeur 100 passe à l'étape E305. Dans la négative, le processeur 100 passe à l'étape E306.

A l'étape E305, le processeur 100 effectue une étape de calcul de propagation sur chaque pixel de la valeur des pixels voisins. Par exemple, le processeur 100 propage itérativement des valeurs de manière itérative entre pixels voisins. Pour cela le processeur 100 calcule une séquence d'images telles que la variation de la valeur associée à un pixel entre deux itérations est proportionnelle à la différence de valeur entre le pixel et ses voisins.

Le processeur 100 calcule pour le pixel sélectionné une propagation à partir de la formule suivante :

$$\begin{aligned}\varphi_{i+1}(l,c) = \varphi_i(l,c) \quad &+ \quad C(l,c,l-1,c) \times \left(\varphi_i(l-1,c) - \varphi_i(l,c)\right) \\ &+ \quad C(l,c,l+1,c) \times \left(\varphi_i(l+1,c) - \varphi_i(l,c)\right) \\ &+ \quad C(l,c,l,c-1) \times \left(\varphi_i(l,c-1) - \varphi_i(l,c)\right) \\ &+ \quad C(l,c,l,c+1) \times \left(\varphi_i(l,c+1) - \varphi_i(l,c)\right)\end{aligned}$$

Dans cette formule, *C* représente une constante de propagation calculée en fonction du niveau de gris du pixel courant et du pixel voisin. Le rôle de cette constante est de faire en sorte que la propagation soit importante si les pixels ont des niveaux de gris proches et faible si les pixels ont des niveaux de gris différents.

Par exemple :

$$C(l_1,c_1,l_2,c_2) = \begin{cases} 0 & \text{si } |v(l_1,c_1) - v(l_2,c_2)| \geq I \\ C_0 \times \left(1 - \dfrac{|v(l_1,c_1) - v(l_2,c_2)|^2}{I^2}\right) & \text{sinon} \end{cases}$$

Où $C_0$ représente la constante de propagation maximale, par exemple $C_0 = 0,1$, *I* représente un seuil au-delà duquel la propagation est stoppée, par exemple *I* = 64, et *v*(*l*, *c*) la valeur de la couleur du pixel situé ligne *l*, colonne *c*.

Dans un mode particulier, l'élévation au carré dans la deuxième ligne peut être supprimée ou remplacée par une puissance différente.

A l'étape suivante E306, le processeur 100 vérifie si une propagation a été effectuée, pour l'itération en cours, pour chaque pixel.

Si une propagation a été effectuée, pour l'itération en cours, pour chaque pixel, le processeur 100 passe à l'étape E308. Dans la négative, le processeur 100 passe à l'étape E307 et sélectionne le pixel suivant et retourne à l'étape E304.

A l'étape E308, le processeur 100 vérifie si les étapes E303 à E308 ont été itérées *M* fois ou si aucun pixel de l'image ne vérifie $\varphi_{min} \leq \varphi_i(1,c) \leq \Phi_{max}$.

Par exemple, *M* est compris entre 10 et 1000. Par exemple, *M* est égal à 100.

Dans l'affirmative, le processeur 100 passe à l'étape E309. Dans la négative, le processeur 100 retourne à l'étape E303 et effectue une nouvelle itération des étapes E303 à E308.

A l'étape E309, le processeur 100 détermine pour chaque pixel que les pixels au voisinage du pixel sont représentatifs d'une zone où le texte est plus sombre que le fond si la dernière valeur calculée $\varphi_i$ pour le pixel est supérieure ou égale à 0,5 et que les pixels au voisinage du pixel sont représentatifs d'une zone où le texte est plus clair que le fond sinon.

La **Fig. 4** représente un second mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond.

A l'étape E400, le processeur 100 effectue pour chaque pixel de l'image une analyse locale du voisinage du pixel.

Pour cela, le processeur 100 calcule, pour le voisinage de chaque pixel au moins une valeur $\varphi$ comprise entre 0 et 1 telle que la valeur nulle représente une zone où le texte est plus clair que le fond, la valeur binaire un représente une zone où le texte est plus sombre que le fond et les valeurs intermédiaires représentent une incertitude plus ou moins forte. En particulier, la valeur un demi signifie qu'il n'est pas possible d'identifier si les pixels au voisinage du pixel sont représentatifs d'une zone où le texte est plus clair que le fond ou d'une zone où le texte est plus sombre que le fond.

Plus précisément, le processeur 100 calcule, pour chaque pixel, plusieurs valeurs $\varphi_s$, $\varphi_m$ *et* $\varphi_1$. $\varphi_s$ est calculée pour un voisinage de 15*15 pixels, $\varphi_m$ est calculée pour un voisinage de 31*31 pixels et $\varphi_1$ est calculée pour un voisinage de 63*63 pixels selon les formules suivantes :

$$\varphi_s = \left\{ \begin{array}{c} 0 \text{ si } \gamma_s \geq \gamma_0 \\ \frac{\gamma_0 - \gamma_s}{\gamma_0} * \varphi_0 \text{ si } \gamma_0 \geq \gamma_s \geq 0 \\ \frac{\gamma_0 - \gamma_s}{\gamma_0} * \varphi_0 \text{ - } \frac{\gamma_s}{\gamma_0} \text{ si } 0 \geq \gamma_s \geq -\gamma_0 \\ 1 \text{ si } -\gamma_0 \geq \gamma_s \end{array} \right\}$$

$$\varphi_m = \left\{ \begin{array}{c} 0 \text{ si } \gamma_m \geq \gamma_0 \\ \frac{\gamma_0 - \gamma_m}{\gamma_0} * \varphi_0 \text{ si } \gamma_0 \geq \gamma_m \geq 0 \\ \frac{\gamma_0 - \gamma_m}{\gamma_0} * \varphi_0 \text{ - } \frac{\gamma_m}{\gamma_0} \text{ si } 0 \geq \gamma_m \geq -\gamma_0 \\ 1 \text{ si } -\gamma_0 \geq \gamma_m \end{array} \right\}$$

$$\varphi_l = \left\{ \begin{array}{c} 0 \text{ si } \gamma_l \geq \gamma_0 \\ \frac{\gamma_0 - \gamma l}{\gamma_0} * \varphi_0 \text{ si } \gamma_0 \geq \gamma l \geq 0 \\ \frac{\gamma_0 - \gamma_l}{\gamma_0} * \varphi_0 \text{ si - } \frac{\gamma_l}{\gamma_0} \; 0 \geq \gamma_l \geq -\gamma_0 \\ 1 \text{ si } -\gamma_0 \geq \gamma_l \end{array} \right\}$$

Dans ces équations, $\gamma_s$ ou $\gamma_m$ ou $\gamma_l$ représente une asymétrie statistique des valeurs des pixels du voisinage. L'asymétrie statistique d'un ensemble de valeurs $x_i$ est définie par : $\gamma_s^3 = \frac{1}{N}\sum_i \left(\frac{x_i - \mu}{\sigma}\right)^3$ ou $\gamma_m^3 = \frac{1}{N}\sum_i \left(\frac{x_i - \mu}{\sigma}\right)^3$ ou $\gamma_l^3 = \frac{1}{N}\sum_i \left(\frac{x_i - \mu}{\sigma}\right)^3$ où *N* est le nombre de pixels voisins et du pixel sélectionné, et $\mu$ est la moyenne des valeurs des pixels voisins et du pixel sélectionné. L'asymétrie statistique est négative si le pixel

est représentatif d'une zone où le texte est plus clair que le fond ou d'une zone où le texte est plus sombre que le fond. $\gamma_0$ représente un seuil constant tel qu'on considère que la mesure est considérée comme fiable si l'asymétrie statistique est plus grande que ce seuil en valeur absolue. $\varphi_0$ est une constante. $\varphi_0$ est par exemple, lorsque l'asymétrie statistique est nulle égale à 0,5 voire comprise entre 0,5 et 0,6 si l'on considère qu'en majorité les pixels au voisinage du pixel sont représentatifs d'une zone où le texte est plus sombre que le fond.

Il est à remarquer ici que le calcul de $\gamma_s$ ou $\gamma_m$ ou $\gamma_l$ est coûteux par la présence d'une racine cubique et d'une racine carrée. Pour simplifier les calculs, on peut remplacer $\gamma_s$ ou $\gamma_m$ ou $\gamma_l$ et $\gamma_0$ par $\gamma_s{}^6$ ou $\gamma_m{}^6$ ou $\gamma_l{}^6$ et $\gamma_0{}^6$ respectivement. Ce changement change légèrement la répartition des valeurs intermédiaires mais fournit un résultat final qualitativement similaire.

Dans ce cas :

$$\varphi_s = \begin{cases} 0 & \text{si } \gamma_s \geq \gamma_0 \\ \frac{\gamma_0^6 - \gamma_s^6}{\gamma_0^6} \times \varphi_0 & \text{si } \gamma_0 \geq \gamma_s \geq \\ \frac{\gamma_0^6 - \gamma_s^6}{\gamma_0^6} \times \varphi_0 + \frac{\gamma_s^6}{\gamma_0^6} & \text{si } 0 \geq \gamma_s \geq -\gamma_0 \\ 1 & \text{si } -\gamma_0 \geq \gamma_s \end{cases}$$

$$\varphi_m = \begin{cases} 0 & \text{si } \gamma_m \geq \gamma_0 \\ \frac{\gamma_0^6 - \gamma_m^6}{\gamma_0^6} \times \varphi_0 & \text{si } \gamma_0 \geq \gamma_m \geq 0 \\ \frac{\gamma_0^6 - \gamma_m^6}{\gamma_0^6} \times \varphi_0 + \frac{\gamma_m^6}{\gamma_0^6} & \text{si } 0 \geq \gamma_m \geq -\gamma_0 \\ 1 & \text{si } -\gamma_0 \geq \gamma_m \end{cases}$$

$$\varphi_l = \begin{cases} 0 & \text{si } \gamma_l \geq \gamma_0 \\ \frac{\gamma_0^6 - \gamma_l^6}{\gamma_0^6} \times \varphi_0 & \text{si } \gamma_0 \geq \gamma_l \geq 0 \\ \frac{\gamma_0^6 - \gamma_l^6}{\gamma_0^6} \times \varphi_0 + \frac{\gamma_l^6}{\gamma_0^6} & \text{si } 0 \geq \gamma_l \geq -\gamma_0 \\ 1 & \text{si } -\gamma_0 \geq \gamma_l \end{cases}$$

Il est à remarquer ici que dans un mode particulier de réalisation, si $\sigma^2 \leq \sigma_0{}^2$, $\varphi = \varphi_0$.

Dans un mode préféré de la présente invention, $\sigma_0{}^2 = 48$, $\gamma_0{}^6 = 3{,}614$ et $\varphi_0 = 0{,}525$.

A l'étape suivante E401, le processeur 100 combine les valeurs $\varphi_s$, $\varphi_m$ *et* $\varphi_1$ avec la formule suivante :

$$\varphi = w_s \varphi_s + w_m \varphi_m + w_l \varphi_l$$

Où $w_s$, $w_m$ et $w_l$ sont des constantes comprises entre 0 et 1 et dont la somme vaut 1. Par exemple $w_s = 0{,}33$, $w_m = 0{,}58$ et $w_l = 0{,}09$.

Bien entendu, d'autres combinaisons de voisinages plus ou moins nombreux et de tailles plus ou moins grandes peuvent être utilisées selon la présente invention.

A l'étape suivante E402, le processeur 100 initialise une table $\Phi_0$ qui comprend la valeur $\varphi$ calculée pour chaque pixel.

A l'étape suivante E403, le processeur 100 sélectionne un premier pixel.

A l'étape E404, le processeur 100 effectue une étape de calcul de propagation sur chaque pixel de la valeur des pixels voisins. Le processeur 100 effectue la propagation dans la même direction que le sens de parcours de l'image. Par exemple, si on parcourt l'image du premier pixel à gauche de la première ligne en haut de l'image vers le dernier pixel de la première ligne en haut de l'image puis on effectue le même parcours ligne après ligne en descendant vers le bas de l'image, la formule suivante est utilisée:

$$\varphi_{i+1}(l,c) = \varphi_i(l,c) \quad + \quad C(l,c,l-1,c) \times \left(\varphi_{i+1}(l-1,c) - \varphi_i(l,c)\right) \\ + \quad C(l,c,l,c-1) \times \left(\varphi_{i+1}(l,c-1) - \varphi_i(l,c)\right)$$

Comme cette formule réutilise les nouvelles valeurs de φ pour les pixels voisins au lieu des anciennes, les valeurs se propagent très vite dans le sens de parcours.
Selon un mode particulier de réalisation de la présente invention, la valeur de $C_0$ est plus élevée, par exemple $C_0$ = 0,94 et éventuellement la valeur de $C_0$ est légèrement différente pour le premier et le deuxième parcours.
Lorsqu'on utilise une valeur élevée pour $C_0$, le processeur 100 utilise la formule suivante :

$$\varphi_{i+1}(l,c) = \begin{cases} \varphi_i(l,c) + \Delta_i(l,c,l-1,c) & \text{si } |\Delta_i(l,c,l-1,c)| > |\Delta_i(l,c,l,c-1)| \\ \varphi_i(l,c) + \Delta_i(l,c,l,c-1) & \text{sinon} \end{cases}$$

Avec :

$$\Delta_i(l_1,c_1,l_2,c_2) = C(l_1,c_1,l_2,c_2) \times \left(\varphi_{i+1}(l_2,c_2) - \varphi_i(l_1,c_1)\right)$$

A l'étape suivante E405, le processeur 100 vérifie si une propagation a été effectuée pour chaque pixel.
Si une propagation a été effectuée pour chaque pixel, le processeur 100 passe à l'étape E407. Dans la négative le processeur 100 passe à l'étape E406 et sélectionne le pixel suivant et retourne à l'étape E404.
A l'étape E407, le processeur 100 sélectionne un premier pixel, plus précisément le premier pixel à droite en bas de l'image.
A l'étape E408, le processeur 100 effectue une étape de calcul de propagation sur chaque pixel de la valeur des pixels voisins. Le processeur 100 utilise la formule suivante :

$$\varphi_{i+1}(l,c) = \varphi_i(l,c) \quad + \quad C(l,c,l+1,c) \times \left(\varphi_{i+1}(l+1,c) - \varphi_i(l,c)\right) \\ + \quad C(l,c,l,c+1) \times \left(\varphi_{i+1}(l,c+1) - \varphi_i(l,c)\right)$$

Comme cette formule réutilise les nouvelles valeurs de φ pour les pixels voisins au lieu des anciennes, les valeurs se propagent très vite dans le sens de parcours.
Selon un mode particulier de réalisation de la présente invention, la valeur de $C_0$ est plus élevée, par exemple $C_0$ = 0,94 et éventuellement la valeur de $C_0$ est légèrement différente pour le premier et le deuxième parcours.
Lorsqu'on utilise une valeur élevée pour $C_0$, le processeur 100 utilise la formule suivante :

$$\varphi_{i+1}(l,c) = \begin{cases} \varphi_i(l,c) + \Delta_i(l,c,l+1,c) & \text{si } |\Delta_i(l,c,l+1,c)| > |\Delta_i(l,c,l,c+1)| \\ \varphi_i(l,c) + \Delta_i(l,c,l,c+1) & \text{sinon} \end{cases}$$

Avec :

$$\Delta_i(l_1,c_1,l_2,c_2) = C(l_1,c_1,l_2,c_2) \times \left(\varphi_{i+1}(l_2,c_2) - \varphi_i(l_1,c_1)\right)$$

A l'étape suivante E409, le processeur 100 vérifie si une propagation a été effectuée pour chaque pixel.
Si une propagation a été effectuée pour chaque pixel, le processeur 100 passe à l'étape E411. Dans la négative, le processeur 100 passe à l'étape E410 et sélectionne le pixel suivant, soit le pixel voisin du pixel sélectionné sur la même ligne et situé à gauche du pixel sélectionné ou le premier pixel situé le plus à droite de la ligne suivante en remontant vers le haut si le pixel sélectionné est le pixel le plus à gauche de la ligne et retourne à l'étape E404.
A l'étape E411, le processeur 100 détermine pour chaque pixel que les pixels au voisinage du pixel sont

représentatifs d'une zone où le texte est plus sombre que le fond si la dernière valeur calculée $\varphi_i$ pour le pixel est supérieure ou égale à 0,5 et que les pixels au voisinage du pixel sont représentatifs d'une zone où le texte est plus claire que le fond sinon.

Bien entendu, les propagations représentées par les étapes E403 à E410 peuvent être remplacées par d'autres combinaisons de propagations, du moment qu'il est effectué au moins une propagation dans chacune des quatre directions de base : de droite à gauche, de gauche à droite, de haut en bas et de bas en haut.

La **Fig. 5** représente un troisième mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond.

A l'étape E500, le processeur 100 effectue pour chaque pixel de l'image une analyse locale du voisinage du pixel.

Pour cela, le processeur 100 calcule, pour le voisinage de chaque pixel au moins un couple de valeurs $m_n$ et $m_r$.

Plus précisément, le processeur 100 calcule, pour chaque pixel, plusieurs valeurs $m_{ns}$, $m_{rs}$, $m_{nm}$, $m_{rm}$, $m_{nl}$ et $M_{rl}$. $m_{ns}$, $m_{rs}$ sont calculés pour un voisinage de 15*15 pixels, $m_{nm}$, $m_{rm}$ sont calculés pour un voisinage de 31*31 pixels et $m_{nl}$ et $m_{rl}$ sont calculés pour un voisinage de 63*63 pixels selon les formules suivantes :

si $\sigma^2 \le \sigma_0^2$ $\quad m_{ns} = 0 \quad m_{rs} = 0$

sinon, si $\gamma_s^3 \ge 0$ $\quad m_{ns} = 0 \quad$ $$m_{rs} = M_r * \min(1, \frac{\gamma_s}{\gamma_0})$$

sinon $\gamma_s^3 \le 0$ $$m_{ns} = M_n * \min(1, \frac{-\gamma_s}{\gamma_0})$$ $m_{rs} = 0$

si $\sigma^2 \le \sigma_0^2$ $\quad m_{nm} = 0 \quad m_{rm} = 0$

sinon, si $\gamma_m^3 \ge 0$ $\quad m_{nm} = 0 \quad$ $$m_{rm} = M_r * \min(1, \frac{\gamma_m}{\gamma_0})$$

sinon $\gamma_m^3 \le 0$ $$m_{nm} = M_n * \min(1, \frac{-\gamma_m}{\gamma_0})$$ $m_{rm} = 0$

si $\sigma^2 \le \sigma_0^2$ $\quad m_{nl} = 0 \quad m_{rl} = 0$

sinon, si $\gamma_l^3 \ge 0$ $\quad m_{nl} = 0 \quad$ $$m_{rl} = M_r * \min(1, \frac{\gamma_l}{\gamma_0})$$

sinon $\gamma_l^3 \le 0$ $$m_{nl} = M_n * \min(1, \frac{-\gamma_l}{\gamma_0})$$ $m_{rl} = 0$

Où $M_n$ et $M_r$ sont des constantes comprises entre 0 et 1 qui représentent le degré de certitude maximum associé à la taille du voisinage et $\gamma_0$ est une constante positive qui représente le seuil d'asymétrie pour lequel ce degré de certitude maximum est atteint. Il est à remarquer ici que les constantes $M_n$ et $M_r$ sont strictement inférieures à 1.

On pourra prendre par exemple : $M_n = 0{,}99$, $M_r = 0{,}99$, et $\gamma_0 = 1$.

Il est à remarquer ici que le calcul de de $\gamma_s$ ou $\gamma_m$ ou $\gamma_l$ est coûteux par la présence d'une racine cubique et d'une racine carrée. Pour simplifier les calculs, on peut remplacer $\gamma_s$ ou $\gamma_m$ ou $\gamma_l$ et $\gamma_0$ par $\gamma_s^6$ ou $\gamma_m^6$ ou $\gamma_l^6$ et $\gamma_0^6$ respectivement. Ce changement change légèrement la répartition des valeurs intermédiaires mais fournit un résultat final qualitativement similaire.

Dans ce cas :

si $\sigma^2 \le \sigma_0^2$ $\quad m_{ns} = 0 \quad m_{rs} = 0$

sinon, si $\gamma_s^3 \ge 0$ $\quad m_{ns} = 0 \quad$ $$m_{rs} = M_r * \min(1, \frac{\gamma_s^6}{\gamma_0^6})$$

sinon $\gamma_s^3 \le 0$ $$m_{ns} = M_n * \min(1, \frac{\gamma_s^6}{\gamma_0^6})$$ $m_{rs} = 0$

(suite)

| | | |
|---|---|---|
| *si* $\sigma^2 \leq \sigma_0^2$ | $m_{nm} = 0$ | $m_{rm} = 0$ |
| sinon, si $\gamma_m^3 \geq 0$ | $m_{nm} = 0$ | $m_{rm} = M_r * \min(1, \frac{\gamma_m^6}{\gamma_0^6})$ |
| sinon $\gamma_m^3 \leq 0$ | $m_{nm} = M_n * \min(1, \frac{\gamma_m^6}{\gamma_0^6})$ | $m_{rl} = 0$ |
| *si* $\sigma^2 \leq \sigma_0^2$ | $m_{nl} = 0$ | $m_{rl} = 0$ |
| sinon, si $\gamma_l^3 \geq 0$ | $m_{nl} = 0$ | $m_{rl} = M_r * \min(1, \frac{\gamma_l^6}{\gamma_0^6})$ |
| sinon $\gamma_l^3 \leq 0$ | $m_{nl} = M_n * \min(1, \frac{\gamma_l^6}{\gamma_0^6})$ | $m_{rl} = 0$ |

A l'étape suivante E501, le processeur 100 combine les valeurs $m_{ns}$, $m_{rs}$, $m_{nm}$, $m_{rm}$ *et* $m_{nl}$ *et* $m_{rl}$ avec les formules suivantes :

$$m'_n = \frac{1}{1-K'} * (m_{ns}m_{nm} + m_{ns}(1 - m_{nm} - m_{rm})) + m_{nm}(1 - m_{ns} - m_{rs})))$$

$$m'_r = \frac{1}{1-K'} * (m_{rs}m_{rm} + m_{rs}(1 - m_{nm} - m_{rm})) + m_{rm}(1 - m_{ns} - m_{rs})))$$

Où $K' = M_{ns}M_{rm} + m_{rs}m_{nm}$
Et

$$m_n = \frac{1}{1-K} * (m'_n m_{nl} + m'_n(1 - m_{nl} - m'_r)) + m_{nl}(1 - m'_s - m'_r)))$$

$$m_r = \frac{1}{1-K} * (m'_r m_{rl} + m'_r(1 - m_{nl} - m_{rl})) + m_{rl}(1 - m'_n - m'_r)))$$

Où $K = m'_n m_{rl} + m'_r m_{nl}$

Il est à remarquer ici que les valeurs $m_{ns}$, $m_{rs}$, $m_{nm}$, $m_{rm}$ *et* $m_{nl}$ *et* $m_{rl}$ peuvent être interverties dans les formules précédentes.

A l'étape E502, le processeur 100 effectue une étape de calcul de propagation sur chaque pixel de la valeur des pixels voisins. Le processeur 100 effectue la propagation selon le principe suivant : si tous les pixels voisins sont représentatifs d'un fond plus clair que le texte, alors le pixel courant est aussi représentatif d'un fond plus clair que le texte.

Le processeur 100 calcule la propagation à partir de la formule suivante :

$$\breve{m}_n^{(V)} = \prod_{v \in V} \breve{m}_n^{(v)}$$

Où V représente un ensemble de pixels voisins du pixel courant. Il peut par exemple s'agir des quatre voisins : haut, bas, gauche et droite ou des huit voisins en ajoutant les voisins en diagonale. En outre, comme pour la différence entre les figures 3 et 4, la propagation peut en variante être effectuée dans une seule direction en calculant les $m_n(i+1)$,

respectivement $m_r(i+1)$ à partir des $m_n(i)$ respectivement $m_r(i)$ et $m^{(V)}(i+1)$. Dans ce cas, V représentera les pixels voisins déjà calculés compte tenu du sens de propagation.

Le processeur 100 effectue de manière itérative le calcul suivant :

$$\begin{cases} m_n(i+1) & = & \frac{1}{1-K(i)}\left(m_n(i)\times\left(1-m_n^{(V)}(i)\right)+(1-m_r(i))\times m_n^{(V)}(i)\right) \\ m_r(i+1) & = & \frac{1}{1-K(i)}m_r(i)\times\left(1-m_n^{(V)}(i)\right) \end{cases}$$

Avec $K(i) = m_r(i) \times m_n^{(V)}(i)$ et i l'indice de l'itération.

A l'étape E503, le processeur 100 effectue une propagation selon le principe suivant : si tous les pixels voisins sont représentatifs d'un fond plus sombre que le texte alors le pixel courant est aussi représentatif d'un fond plus sombre que le texte.

Le processeur 100 effectue de manière itérative le calcul suivant :

$$\begin{cases} m_r(i+1) & = & \frac{1}{1-K(i)}\left(m_{nr}(i)\times\left(1-m_r^{(V)}(i)\right)+(1-m_n(i))\times m_r^{(V)}(i)\right) \\ m_n(i+1) & = & \frac{1}{1-K(i)}m_n(i)\times\left(1-m_r^{(V)}(i)\right) \end{cases}$$

A l'étape suivante E504, le processeur 100 détermine pour chaque pixel que les pixels au voisinage du pixel sont représentatifs d'une zone où le texte est plus sombre que le fond si la dernière valeur calculée $m_n \geq m_r$ et que les pixels au voisinage du pixel sont représentatifs d'une zone où le texte est plus clair que le fond sinon.

La **Fig. 6** représente un quatrième mode particulier de réalisation de l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond.

A l'étape E600, le processeur 100 effectue pour chaque pixel de l'image une analyse locale du voisinage du pixel.

Pour cela, le processeur 100 calcule, pour le voisinage de chaque pixel au moins un couple de valeurs $m_n$ *et* $m_r$.

Plus précisément, le processeur 100 calcule, pour chaque pixel, plusieurs valeurs $m_{ns}$, $m_{rs}$, $m_{nm}$, $m_{rm}$ *et* $m_{nl}$ *et* $m_{rl}$. $m_{ns}$, $m_{rs}$ sont calculés pour un voisinage de 15*15 pixels, $m_{nm}$, $m_{rm}$ sont calculés pour un voisinage de 31*31 pixels et $m_{nl}$ *et* $m_{rl}$ sont calculés pour un voisinage de 63*63 pixels selon les formules suivantes :

| | | |
|---|---|---|
| *si* $\sigma^2 \leq \sigma_0^2$ | $m_{ns} = 0$ | $m_{rs} = 0$ |
| sinon, si $\gamma_s^3 \geq 0$ | $m_{ns} = 0$ | $m_{rs} = M_r * \min(1, \frac{\gamma_s}{\gamma_0})$ |
| sinon $\gamma_s^3 \leq 0$ | $m_{ns} = M_n * \min(1, \frac{-\gamma_s}{\gamma_0})$ | $m_{rs} = 0$ |
| *si* $\sigma^2 \leq \sigma_0^2$ | $m_{nm} = 0$ | $m_{rm} = 0$ |
| sinon, si $\gamma_m^3 \geq 0$ | $m_{nm} = 0$ | $m_{rm} = M_r * \min(1, \frac{\gamma_m}{\gamma_0})$ |
| sinon $\gamma_m^3 \leq 0$ | $m_{nm} = M_n * \min(1, \frac{-\gamma_m}{\gamma_0})$ | $m_{rl} = 0$ |
| *si* $\sigma^2 \leq \sigma_0^2$ | $m_{nl} = 0$ | $m_{rl} = 0$ |
| sinon, si $\gamma_l^3 \geq 0$ | $m_{nl} = 0$ | $m_{rl} = M_r * \min(1, \frac{\gamma_l}{\gamma_0})$ |
| sinon $\gamma_l^3 \leq 0$ | $m_{nl} = M_n * \min(1, \frac{-\gamma_l}{\gamma_0})$ | $m_{rl} = 0$ |

Où $M_n$ et $M_r$ sont des constantes comprises entre 0 et 1 qui représentent le degré de certitude maximum associé à la taille du voisinage et $\gamma_0$ est une constante positive qui représente le seuil d'asymétrie pour lequel ce degré de certitude maximum est atteint. Il est à remarquer ici que les constantes $M_n$ et $M_r$ sont strictement inférieures à 1.

On pourra prendre par exemple : $M_n$ = 0,99, $M_r$ = 0,99, et $\gamma_0$ = 1.

Il est à remarquer ici que le calcul de de $\gamma_s$ ou $\gamma_m$ ou $\gamma_l$ est coûteux par la présence d'une racine cubique et d'une racine carrée. Pour simplifier les calculs, on peut remplacer $\gamma_s$ ou $\gamma_m$ ou $\gamma_l$ et $\gamma_0$ par $\gamma_s^6$ ou $\gamma_m^6$ ou $\gamma_l^6$ et $\gamma_0^6$ respectivement. Ce changement change légèrement la répartition des valeurs intermédiaires mais fournit un résultat final qualitativement similaire.

Dans ce cas :

| | | |
|---|---|---|
| *si* $\sigma^2 \leq \sigma_0^2$ | $m_{ns} = 0$ | $m_{rs} = 0$ |
| sinon, si $\gamma_s^3 \geq 0$ | $m_{ns} = 0$ | $m_{rs} = M_r * \min(1, \frac{\gamma_s^6}{\gamma_0^6})$ |
| sinon $\gamma_s^3 \leq 0$ | $m_{ns} = M_n * \min(1, \frac{\gamma_s^6}{\gamma_0^6})$ | $m_{rs} = 0$ |
| *si* $\sigma^2 \leq \sigma_0^2$ | $m_{nm} = 0$ | $m_{rm} = 0$ |
| sinon, si $\gamma_m^3 \geq 0$ | $m_{nm} = 0$ | $m_{rm} = M_r * \min(1, \frac{\gamma_m^6}{\gamma_0^6})$ |
| sinon $\gamma_m^3 \leq 0$ | $m_{nm} = M_n * \min(1, \frac{\gamma_m^6}{\gamma_0^6})$ | $m_{rl} = 0$ |
| *si* $\sigma^2 \leq \sigma_0^2$ | $m_{nl} = 0$ | $m_{rl} = 0$ |
| sinon, si $\gamma_l^3 \geq 0$ | $m_{nl} = 0$ | $m_{rl} = M_r * \min(1, \frac{\gamma_l^6}{\gamma_0^6})$ |
| sinon $\gamma_l^3 \leq 0$ | $m_{nl} = M_n * \min(1, \frac{\gamma_l^6}{\gamma_0^6})$ | $m_{rl} = 0$ |

A l'étape suivante E601, le processeur 100 combine les valeurs $m_{ns}$, $m_{rs}$, $m_{nm}$, $m_{rm}$ *et* $m_{nl}$ *et* $m_{rl}$ avec les formules suivantes :

$$m'_n = \frac{1}{1-K'} * (m_{ns} m_{nm} + m_{ns}(1 - m_{nm} - m_{rm})) + m_{nm}(1 - m_{ns} - m_{rs}))$$

$$m'_r = \frac{1}{1-K'} * (m_{rs} m_{rm} + m_{rs}(1 - m_{nm} - m_{rm})) + m_{rm}(1 - m_{ns} - m_{rs}))$$

Où $K' = m_{ns}m_{rm} + m_{rs}m_{nm}$

Et

$$m_n = \frac{1}{1-K} * (m'_n m_{nl} + m'_n(1 - m_{nl} - m'_r)) + m_{nl}(1 - m'_s - m'_r))$$

$$m_r = \frac{1}{1-K} * (m'_r m_{rl} + m'_r(1 - m_{nl} - m_{rl})) + m_{rl}(1 - m'_n - m'_r))$$

Où $K = m'_n m_{rl} + m'_r m_{nl}$

Il est à remarquer ici que les valeurs $m_{ns}$, $m_{rs}$, $m_{nm}$, $m_{rm}$ et $m_{nl}$ et $m_{rl}$ peuvent être interverties dans les formules précédentes.

A l'étape E602, le processeur 100 sélectionne un premier pixel. Par exemple le premier pixel sélectionné est le pixel le plus à gauche en haut de l'image.

A l'étape suivante E603, le processeur 100 vérifie si une variable $K(i) = m_r(i) \times m_n^{(V)}(i+1)$ est inférieure à $K_0$. $K_0$ est par exemple égal à 0,9. Il est à remarquer ici que i est un indice associé au pixel sélectionné.

Si $K(i) < K_0$, le processeur 100 passe à l'étape E604. Dans la négative, le processeur 100 passe à l'étape E605.

A l'étape E604, le processeur 100 considère que les pixels voisins situés au-dessus ou à gauche du pixel courant, et propage avec la formule suivante :

$$\begin{cases} m_n(i+1) & = & \frac{1}{1-K(i)}\left(m_n(i) \times \left(1 - m_n^{(V)}(i+1)\right) + (1 - m_r(i)) \times m_n^{(V)}(i+1)\right) \\ m_r(i+1) & = & \frac{1}{1-K(i)} m_r(i) \times \left(1 - m_n^{(V)}(i+1)\right) \end{cases}$$

Avec $K(i) = m_r(i) \times m_n^{(V)}(i+1)$.

Cette opération effectuée, le processeur 100 passe à l'étape suivante E606.

A l'étape E605, le processeur 100 reprend les valeurs de l'itération précédente pour le pixel: $m_n(i+1) = m_n(i)$ et $m_r(i+1) = m_r(i)$. Cette opération effectuée, le processeur 100 passe à l'étape suivante E606.

A l'étape E606, le processeur 100 vérifie si tous les pixels ont été traités pour l'itération en cours d'exécution. Si tous les pixels ont été traités pour l'itération en cours d'exécution, le processeur 100 passe à l'étape E608. Dans la négative, le processeur 100 passe à l'étape suivante E607 et sélectionne le plus proche pixel voisin à gauche du pixel traité ou si le pixel traité est le dernier pixel d'une ligne, le processeur 100 sélectionne le pixel le plus à gauche de la ligne suivante et retourne à l'étape E603.

A l'étape E608, le processeur 100 sélectionne un premier pixel. Par exemple le premier pixel sélectionné est le pixel le plus à droite en bas de l'image.

A l'étape suivante E609, le processeur 100 vérifie si une variable $K(i) = m_r(i) \times m_n^{(V)}(i+1)$ est inférieure à $K_0$. $K_0$ est par exemple égal à 0,9. Il est à remarquer ici que i est un indice associé au pixel sélectionné.

Si $K(i) < K_0$, le processeur 100 passe à l'étape E610. Dans la négative, le processeur 100 passe à l'étape E611.

A l'étape E610, le processeur 100 ne considère que les pixels voisins situés au-dessus ou à gauche du pixel courant, et propage avec la formule suivante :

$$\begin{cases} m_n(i+1) & = & \frac{1}{1-K(i)}\left(m_n(i) \times \left(1 - m_n^{(V)}(i+1)\right) + (1 - m_r(i)) \times m_n^{(V)}(i+1)\right) \\ m_r(i+1) & = & \frac{1}{1-K(i)} m_r(i) \times \left(1 - m_n^{(V)}(i+1)\right) \end{cases}$$

Avec $K(i) = m_r(i) \times m_n^{(V)}(i+1)$.

Cette opération effectuée, le processeur 100 passe à l'étape suivante E612.

A l'étape E611, le processeur 100 reprend les valeurs de l'itération précédente pour le pixel: $m_n(i+1) = m_n(i)$ et $m_r(i+1) = m_r(i)$. Cette opération effectuée, le processeur 100 passe à l'étape suivante E612.

A l'étape E612, le processeur 100 vérifie si tous les pixels ont été traités pour l'itération en cours d'exécution. Si tous les pixels ont été traités pour l'itération en cours d'exécution, le processeur 100 passe à l'étape E614. Dans la négative, le processeur 100 passe à l'étape suivante E613 et sélectionne le plus proche pixel voisin à droite du pixel traité ou si le pixel traité est le dernier pixel d'une ligne, le processeur 100 sélectionne le pixel le plus à droite de la ligne suivante en remontant vers le haut et retourne à l'étape E609.

Bien entendu, la présente invention n'est nullement limitée aux modes de réalisation décrits ici, mais englobe,

bien au contraire, toute variante à la portée de l'homme du métier et particulièrement la combinaison de différents modes de réalisation de la présente invention.

## Revendications

**1.** Procédé d'affectation aux pixels d'une image d'une première valeur ou d'une seconde valeur, les pixels de l'image correspondant à du texte ou du fond, **caractérisé en ce que** le procédé comporte les étapes, exécutées pour chaque pixel de l'image de :

- détermination (E203), à partir des valeurs des pixels voisins et de la valeur du pixel, si les pixels au voisinage du pixel sont représentatifs d'une zone où le texte est plus clair que le fond ou d'une zone où le texte est plus sombre que le fond,
- détermination (E204) d'un seuil à partir du résultat de la détermination si les pixels au voisinage du pixel sont représentatifs d'une zone où le texte est plus clair que le fond ou d'une zone où le texte est plus sombre que le fond,
- affectation (E205) au pixel de la première valeur ou de la seconde valeur en fonction de la comparaison de la valeur du pixel au seuil déterminé.

**2.** Procédé selon la revendication 1, **caractérisé en ce que** la détermination, si les pixels au voisinage du pixel sont représentatifs d'une zone où le texte est plus clair que le fond ou d'une zone où le texte est plus sombre que le fond, est effectuée en fonction du signe d'une asymétrie statistique sur les valeurs des pixels voisins et la valeur du pixel.

**3.** Procédé selon la revendication 2, **caractérisé en ce que** l'asymétrie statistique est calculée selon la formule suivante :

$\gamma^3 = \frac{1}{N}\sum_i \left(\frac{x_i-\mu}{\sigma}\right)^3$ où $N$ est le nombre de pixels voisins plus un, $\sigma$ un écart type déterminé sur les valeurs du pixel et des pixels voisins, et $\mu$ est la moyenne des valeurs du pixel et des pixels voisins et $x_i$ prenant la valeur du pixel et des pixels voisins.

**4.** Procédé selon la revendication 2 ou 3, **caractérisé en ce que** le seuil est déterminé en fonction de la valeur de l'asymétrie statistique.

**5.** Procédé selon la revendication 1, **caractérisé en ce que** la détermination, si les pixels au voisinage du pixel sont représentatifs d'une zone où le texte est plus clair que le fond ou d'une zone où le texte est plus sombre que le fond, est effectuée en comparant la valeur médiane *m* des valeurs des pixels voisins et du pixel avec la moyenne des valeurs des pixels voisins et du pixel.

**6.** Procédé selon l'une quelconque des revendications précédentes, **caractérisé en ce que** le seuil est déterminé en fonction de l'écart type déterminé sur les valeurs du pixel et des pixels voisins et de la moyenne des valeurs des pixels voisins et du pixel.

**7.** Procédé selon la revendication 6, **caractérisé en ce que** le seuil est déterminé selon la formule suivante :

$$\boldsymbol{\tau} = \begin{cases} \boldsymbol{\tau_0} & \text{si } \boldsymbol{\sigma} \leq \boldsymbol{\sigma_0} \\ \boldsymbol{\tau_0} \times \dfrac{\boldsymbol{\sigma_1^2} - \boldsymbol{\sigma^2}}{\boldsymbol{\sigma_1^2} - \boldsymbol{\sigma_0^2}} + (\boldsymbol{\mu} + \boldsymbol{k} \times \boldsymbol{\sigma} \times \boldsymbol{\gamma^3}) \times \dfrac{\boldsymbol{\sigma^2} - \boldsymbol{\sigma_0^2}}{\boldsymbol{\sigma_1^2} - \boldsymbol{\sigma_0^2}} & \text{si } \boldsymbol{\sigma_0} \leq \boldsymbol{\sigma} \leq \boldsymbol{\sigma_1} \\ \boldsymbol{\mu} + \boldsymbol{k} \times \boldsymbol{\sigma} \times \boldsymbol{\gamma^3} & \text{si } \boldsymbol{\sigma} \geq \boldsymbol{\sigma_1} \end{cases}$$

où $\boldsymbol{\sigma_1^2}$ et $\boldsymbol{\sigma_0^2}$ sont des valeurs prédéterminées telles que $\boldsymbol{\sigma_1^2}$ est supérieur à $\boldsymbol{\sigma_0^2}$, $\tau_0$ est un seuil global calculé sur l'ensemble de l'image, $k$ est une constante, $\mu$ est la moyenne des valeurs du pixel et des pixels voisins, $\sigma$ est l'écart type déterminé sur les valeurs du pixel et des pixels voisins et $\gamma^3$ est l'asymétrie statistique.

**8.** Procédé selon la revendication 6, **caractérisé en ce que** le seuil est déterminé selon la formule suivante :

$\tau = \mu \times (1 + k \times (^{\sigma}/_{R} - 1))$ si les pixels au voisinage du pixel sont représentatifs d'une zone où le texte est plus sombre que le fond,
$\tau = M - (M - \mu) \times (1 - k \times (^{\sigma}/_{R} - 1))$ si les pixels au voisinage du pixel sont représentatifs d'une zone où le texte est plus clair que le fond,
où $M$ est la valeur maximale que peut prendre un pixel, $k$ et $R$ sont des valeurs prédéterminées, $\mu$ est la moyenne des valeurs du pixel et des pixels voisins, $\sigma$ est l'écart type déterminé sur les valeurs du pixel et des pixels voisins.

**9.** Procédé selon la revendication 1, **caractérisé en ce que** l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond est effectuée à partir de paires de nombres réels compris entre 0 et 1.

**10.** Procédé selon la revendication 9, **caractérisé en ce que** l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond est effectuée est utilisant un algorithme de propagation.

**11.** Procédé selon la revendication 10, **caractérisé en ce que** l'algorithme de propagation est effectué dans deux sens différents de parcours des pixels.

**12.** Procédé selon la revendication 9, **caractérisé en ce que** l'étape de détermination, à partir des valeurs des pixels voisins et de la valeur du pixel, si les pixels au voisinage du pixel sont représentatifs d'une zone où le texte est plus clair que le fond ou d'une zone où le texte est plus sombre que le fond est effectuée à partir de différents nombres de pixels voisins.

**13.** Dispositif d'affectation aux pixels d'une image d'une première valeur ou d'une seconde valeur, **caractérisé en ce que** le dispositif comporte:

- des moyens de détermination, pour chaque pixel de l'image, à partir des valeurs des pixels voisins et de la valeur du pixel, si les pixels au voisinage du pixel sont représentatifs d'une zone où le texte est plus clair que le fond ou d'une zone où le texte est plus sombre que le fond,
- des moyens de détermination, pour chaque pixel de l'image, d'un seuil à partir du résultat de la détermination si les pixels au voisinage du pixel sont représentatifs d'une zone où le texte est plus clair que le fond ou d'une zone où le texte est plus sombre que le fond,
- des moyens d'affectation, pour chaque pixel de l'image, au pixel de la première valeur ou de la seconde valeur en fonction de la comparaison de la valeur du pixel au seuil déterminé.

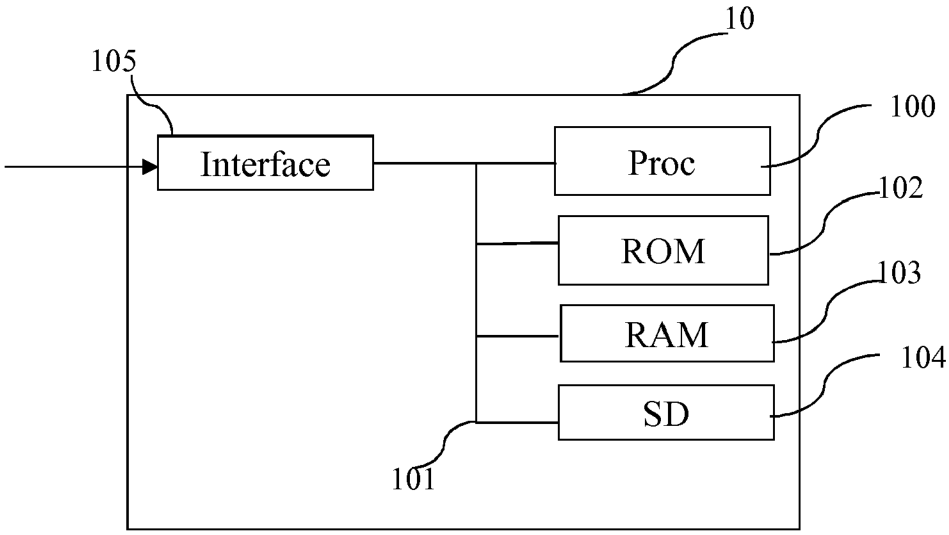


Fig. 1

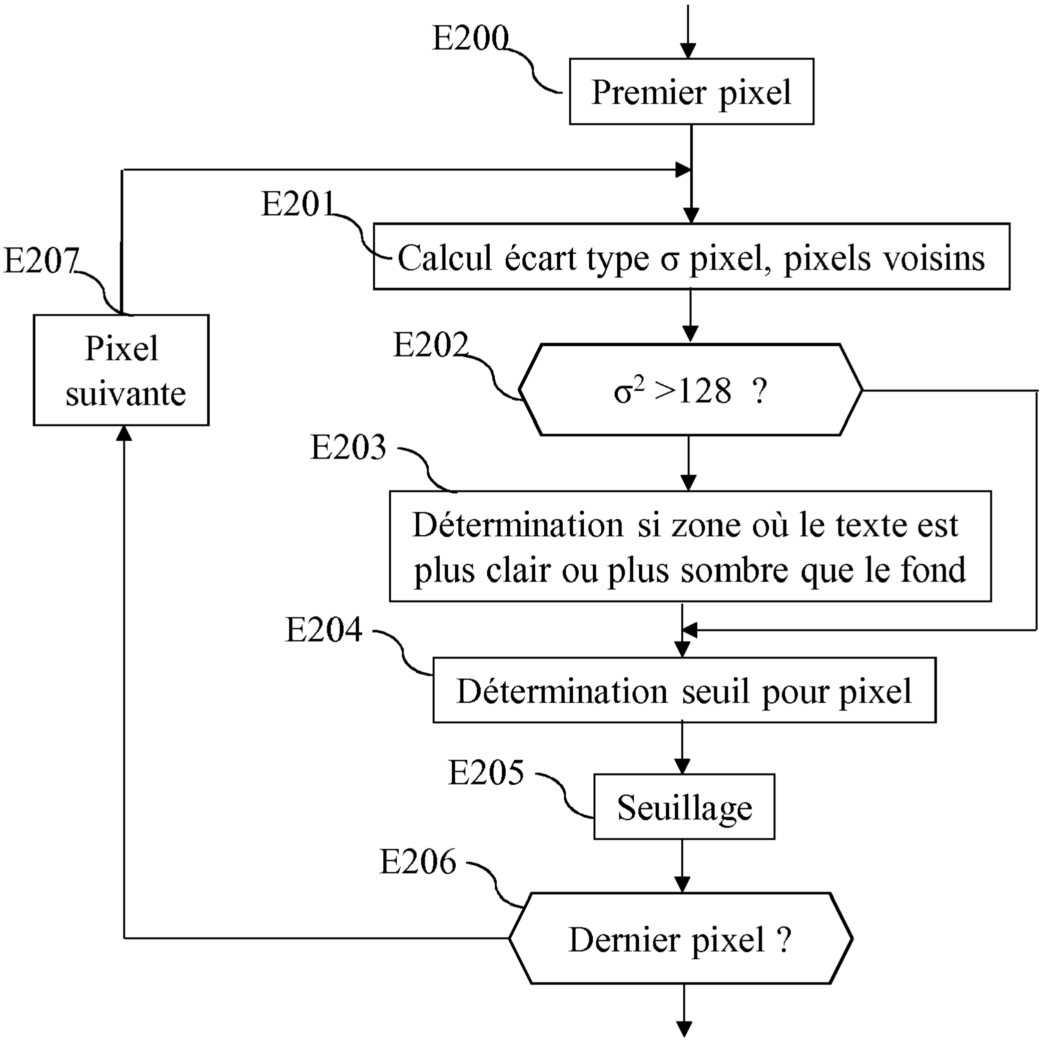
E200
Premier pixel
E201
Calcul écart type σ pixel, pixels voisins
E207
Pixel suivante
E202
σ2 >128 ?
E203
Détermination si zone où le texte est plus clair ou plus sombre que le fond
E204
Détermination seuil pour pixel
E205
Seuillage
E206
Dernier pixel ?

Fig. 2

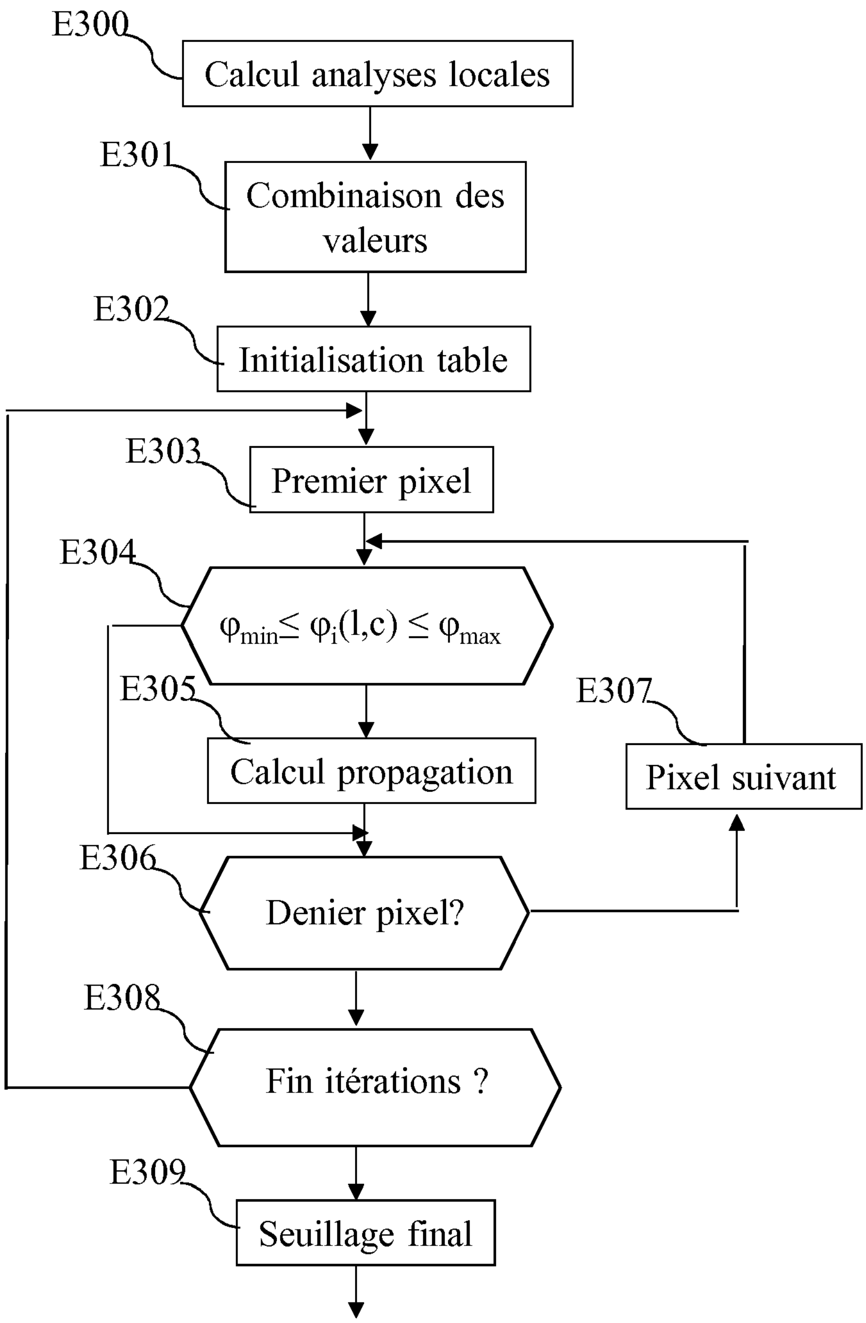
E300
Calcul analyses locales
E301
Combinaison des valeurs
E302
Initialisation table
E303
Premier pixel
E304
$\varphi_{min} \leq \varphi_i(l,c) \leq \varphi_{max}$
E305
Calcul propagation
E307
Pixel suivant
E306
Denier pixel?
E308
Fin itérations ?
E309
Seuillage final

Fig. 3

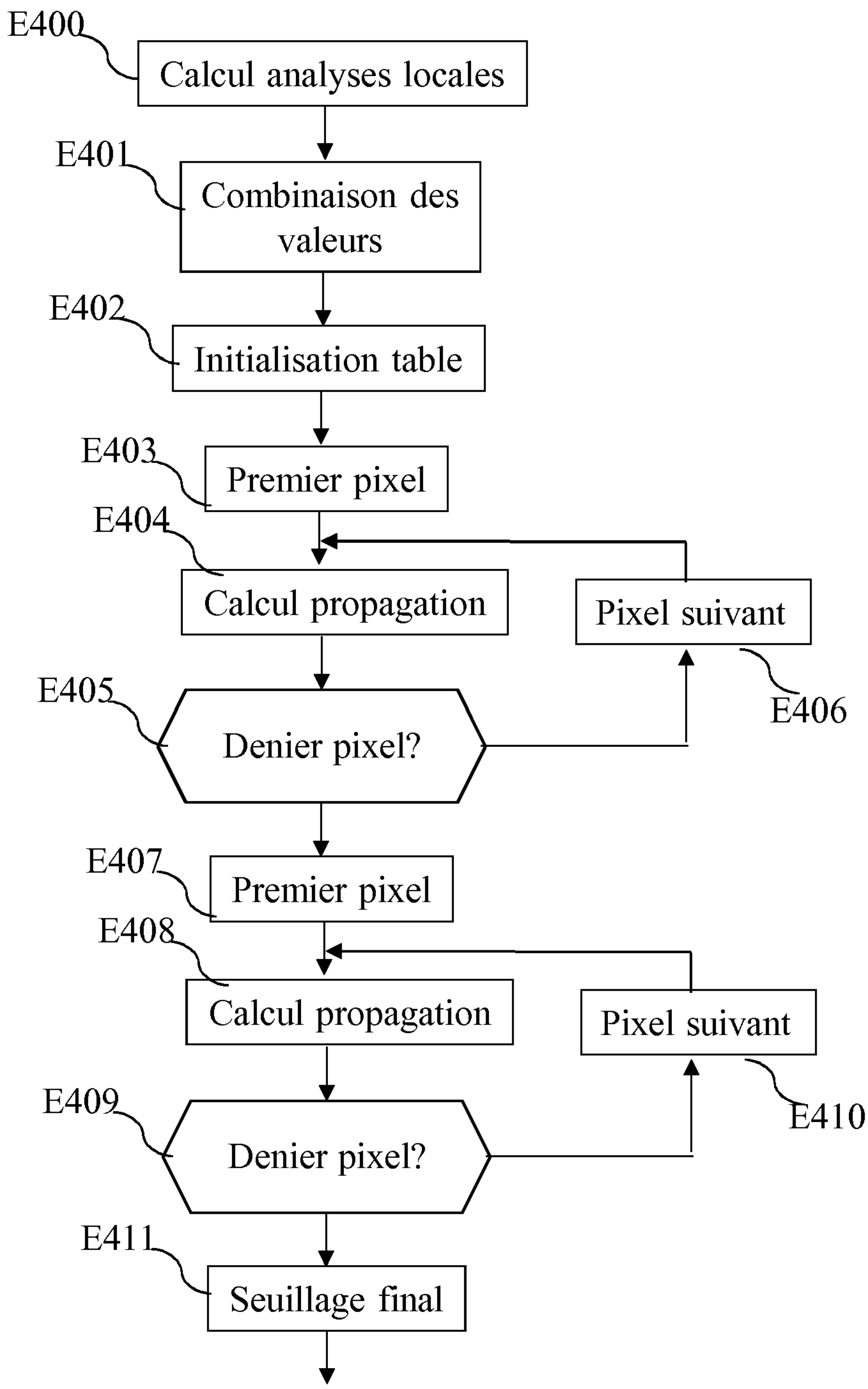
E400
Calcul analyses locales
E401
Combinaison des valeurs
E402
Initialisation table
E403
Premier pixel
E404
Calcul propagation
Pixel suivant
E405
Denier pixel?
E406
E407
Premier pixel
E408
Calcul propagation
Pixel suivant
E409
Denier pixel?
E410
E411
Seuillage final

Fig. 4

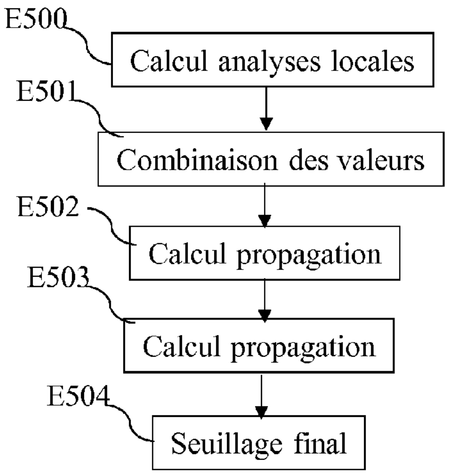
E500
Calcul analyses locales
E501
Combinaison des valeurs
E502
Calcul propagation
E503
Calcul propagation
E504
Seuillage final

Fig. 5

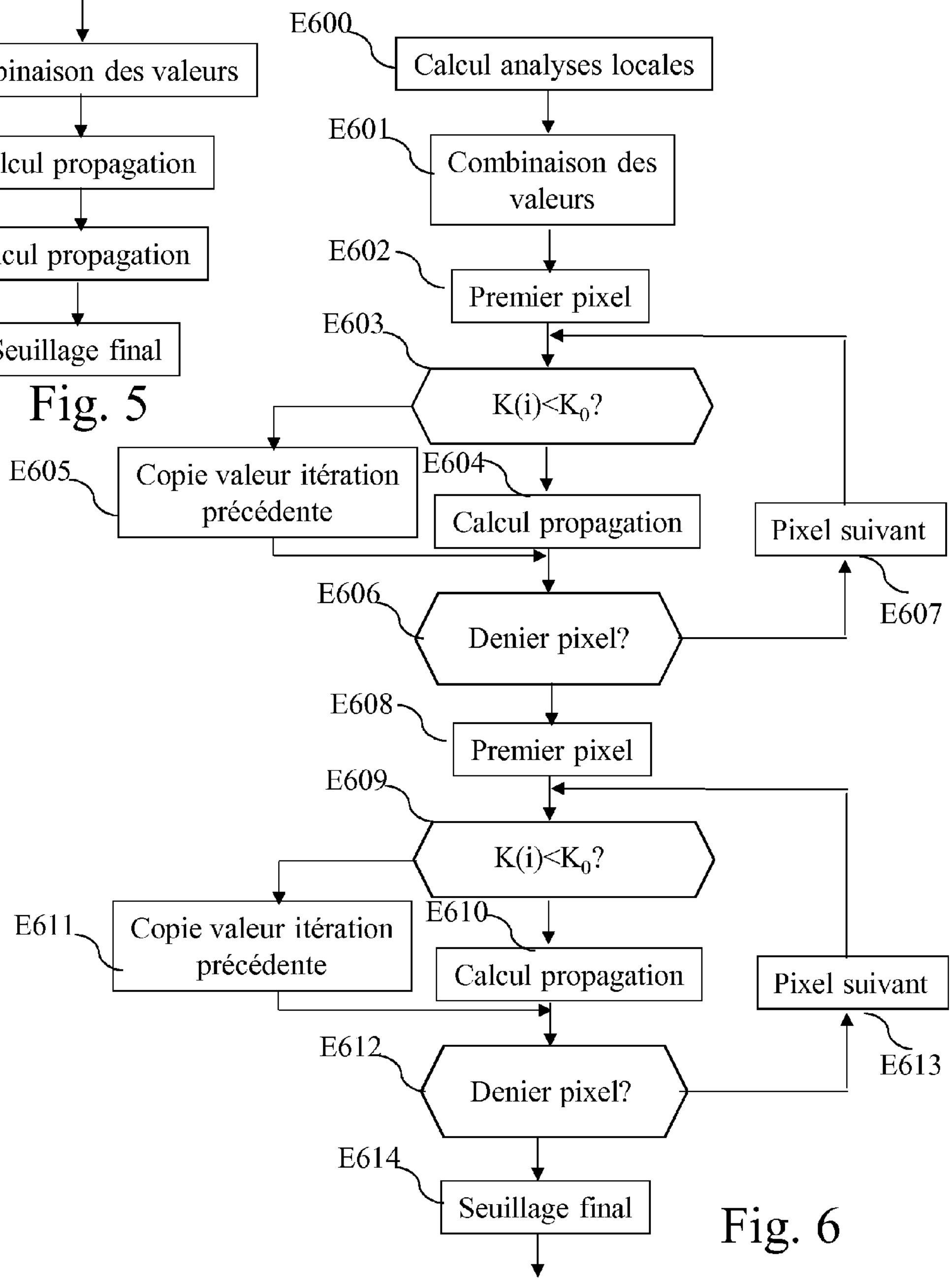
E600
Calcul analyses locales
E601
Combinaison des valeurs
E602
Premier pixel
E603
K(i)<K0?
E605
Copie valeur itération précédente
E604
Calcul propagation
Pixel suivant
E607
E606
Denier pixel?
E608
Premier pixel
E609
K(i)<K0?
E611
Copie valeur itération précédente
E610
Calcul propagation
Pixel suivant
E613
E612
Denier pixel?
E614
Seuillage final

Fig. 6